# EUROPÄISCHE PATENTSCHRIFT

(11) **EP 0 860 761 B1**
(45) Veröffentlichungstag und Bekanntmachung des Hinweises auf die Patenterteilung: **03.07.2002**
(21) Anmeldenummer: 98101856.7
(22) Anmeldetag: 04.02.1998
(51) Int. Cl.: G05B 23/02, G01H 1/00, G01M 15/00

(54) **Maschinendiagnosesystem**
Diagnostic system for a machine
Système de diagnostic d'une machine

(30) Priorität: 22.02.1997 DE 19707173
(43) Veröffentlichungstag der Anmeldung: 26.08.1998
(73) Patentinhaber: Voith Hydro GmbH & Co. KG, 89522 Heidenheim (DE)
(72) Erfinder: Grosse, Gilbert, 89518 Heidenheim (DE)
(74) Vertreter: Dr. Weitzel & Partner

(56) Entgegenhaltungen:
- EP-A- 0 730 211
- DE-A- 4 406 723
- US-A- 4 783 998
- US-A- 5 023 045
- US-A- 5 133 046
- US-A- 5 223 207
- US-A- 5 319 572
- US-A- 5 483 833
- US-A- 5 586 066
- PERSCHL F ET AL: "EIN UBERWACHUNGSSYSTEM ZUR FEHLERDIAGNOSE IN VERFAHRENS -TECHNISCHENANLAGEN" AUTOMATISIERUNGSTECHNISCHE PRAXIS - ATP, Bd. 38, Nr. 1, 1.Januar 1996, Seiten 45-51, XP000551816
- E.V UREV ET AL: "THE CONCEPT OF A SYSTEM FOR VIBRATIONAL DIAGNOSTICS OF A STEAM TURBINE" THERMAL ENGINEERING, Bd. 42, Nr. 4, April 1995, RUSSIA, Seiten 306-311, XP002061649

## Beschreibung

Die Erfindung betrifft ein Maschinendiagnosesystem zur zustandsorientierten Betriebsüberwachung einer Maschine mit einem Kennwertmodul, welches ausgehend von maschinenzustandsbezogenen Meßwerten diagnoserelevante Kennwerte bildet, und mit einem Ursachenmodul, welches aus den Kennwerten eine Ursache für die erfaßten Schwingungs-Meßwerte diagnostiziert, und ein Verfahren zur Durchführung einer entsprechenden Maschinendiagnose.

Ein derartiges, eine Diagnose des Schwingungszustands von Wasserkraftmaschinen durchführendes Maschinendiagnosesystem ist aus der Firmendruckschrift t 2981 7.95 der Firma Voith bekannt. Dadurch können sich anbahnende Schäden frühzeitig erkannt werden und es kann die Betriebsweise der Maschine optimiert werden. Ansätze für ein computergestütztes Maschinendiagnosesystem wurden von anderen Herstellern von Überwachungseinrichtungen vorgestellt. Es handelt sich dabei aber entweder um reine mathematische Analyse der Signale, oder es wird eine in der Praxis nicht durchführbare Definition von Schwingungsmustern vorausgesetzt.

Es wird außerdem auf die Druckschrift DE 44 06 723 hingewiesen, aus der im wesentlichen die Oberbegriffe der Ansprüche 1 und 16 hervorgehen.

Aufgabe der Erfindung ist es deshalb, ein Maschinendiagnosesystem bereitzustellen, bei welchem der Diagnoseaufwand verringert und die Diagnosezuverlässigkeit erhöht ist.

Diese Aufgabe wird erfindungsgemäß dadurch gelöst, daß das Ursachenmodul für mindestens eine mögliche Ursache jeweils eine Ursachenwahrscheinlichkeit berechnet, die angibt, mit welcher Wahrscheinlichkeit die entsprechende Ursache für das Vorliegen der erfaßten Meßwerte verantwortlich ist.

Dadurch kann die Diagnose von einer überschaubaren Anzahl möglicher Ursachen für die erfaßten Meßwerte ausgehen und der Diagnoseaufwand somit in praktikablen Grenzen gehalten werden.

Wenn das Ursachenmodul zur Berechnung der Ursachenwahrscheinlichkeit neben einzelnen Kennwerten mindestens eine Kennwertverknüpfung heranzieht, kann die Diagnosegenauigkeit und -zuverlässigkeit erhöht werden, da durch die Verwendungvon Kennwertverknüpfungen auch der Einfluß vernetzter Kausalzusammenhänge zwischen Kennwerten untereinander und aktuellem Maschinenzustand berücksichtigt werden kann.

Es wurde bereits ein Ursachenmodul berechnet, das die Ursachenwahrscheinlichkeit als gewichtetes arithmetisches Mittel von Einzelwahrscheinlichkeiten erfaßt, wobei die Einzelwahrscheinlichkeiten einzelnen Kennwerten oder Kennwertverknüpfungen zugeordnet sind und zur Mittelwertbildung mit individuellen Gewichtungsfaktoren gewichtet sind. Auf diese Weise kann in die Entscheidung, ob eine bestimmte Ursache vorliegt, nicht nur der mit dieser Ursache am offensichtlichsten zusammenhängende Kennwert eingehen, sondern auch der Einfluß weiterer Kennwerte bzw. Kennwertverknüpfungen berücksichtigt werden.

Falls die individuellen Gewichtungsfaktoren kennwertbeeinflußt sind, ist die Ursachenwahrscheinlichkeitsberechnung so flexibel, daß sich erst beim Vorliegen von Zwischenergebnissen eröffnende Möglichkeiten zur Plausibilitätsüberprüfung noch vom Ursachenmodul wahrgenommen werden können.

Das Kennwertmodul bildet von Betriebsparametern abhängige Kennwerte, wobei Betriebsparameter betriebsartbezogene Meßwerte sind. Das Ursachenmodul zieht die Abhängigkeit der Kennwerte oder Kennwertverknüpfungen von den Betriebsparametem zur Berechnung der

Ursachenwahrscheinlichkeit heran. Dieser Maßnahme liegt die Erkenntnis zugrunde, daß die Darstellung der Meßwerte als Funktion der Zeit nur wenig aufschlußreich ist, da die Vielfalt der Parameter, die das Maschinenverhalten beinflussen, in dieser Darstellung vermischt wird. Dabei können die Kennwerte oder Kennwertverknüpfungen zeitabhängig sein, wobei das Kennwertmodul die Kennwerte oder Kennwertverknüpfungen bestimmten Betriebsparameterintervallen zuordnet und zeitlich mittelt, um Kennwert-Betriebsparameter-Histogramme zu bilden. Dadurch können die Zusammenhänge zwischen Kennwerten und Schwingungsursachen besonders differenziert und genau erfaßt werden, wobei eine spezielle Trendanalyse die Abhängigkeiten der Kennwerte von Betriebsparametern als auch von der Zeit auswerten kann.

Es hat sich herausgestellt, daß das erfindungsgemäße Maschinendiagnosesystem speziell für rotierende Maschinen und insbesondere für hydraulische Strömungsmaschinen, z.B. Turbinen, geeignet ist.

Für derartige Maschinen sind z.B. die spektralen Anteile der Wellenschwingungen, die Orbit-Charakteristiken der Wellenschwingungen und die Phasenwinkel der Wellenschwingungen aussagekräftige und diagnoserelevante Kennwerte. Dabei ist es für den Diagnoseerfolg vorteilhaft, die Abhängigkeit dieser oder weiterer Kennwerte von einem Betriebsparameter zu berücksichtigen, welcher angibt, ob ein Pumpbetrieb oder ein Turbinenbetrieb oder ein Phasenschieberbetrieb oder ein Anfahren der Maschine oder ein Auslaufen der Maschine vorliegt. Daneben haben sich aber auch die Betriebsparameter Momentanleistung der Maschine, Saugrohrdruck, Rohrbahndruck, Leitradstellung und Fallhöhe für eine hydraulische Strömungsmaschine als nützlich erwiesen.

Ein in das Diagnosesystem integriertes Warnmodul gibt dem Maschinenbetreiber bei Vorliegen einer bestimmten Ursachenwahrscheinlichkeit oder einer bestimmten Verteilung von Ursachenwahrscheinlichkeiten neben der Warnung auch die Warscheinlichkeit für die vorliegenden Fehler aus, so daß dieser selbstverantwortlich geeignete Schritte ergreifen oder die Warnung bei ihm bekannten außergewöhnlichen Umständen ignorieren kann.

Daneben oder alternativ kann ein Ausführungsbeispiel des Maschinendiagnosesystems aber auch ein Reaktionsmodul umfassen, welches bei Vorliegen einer bestimmten Ursachenwahrscheinlichkeit oder einer bestimmten Verteilung von Ursachenwahrscheinlichkeiten in den Betrieb der Maschine eingreifen kann. Ein derartiger Eingriff kann z.B. eine Leistungsbegrenzung, ein Lastwechsel oder sogar ein Maschinenstopp sein. Hierdurch wird eine menschliches Versagen als Fehlerquelle weitgehend ausschließende Automatik bereitgestellt.

Die Berechnung der Ursachenwahrscheinlichkeit durch das Ursachenmodul oder die Bildung der Kennwerte durch das Kennwertmodul geht von einer Wissensbasis aus, welche maschinenindividuelles Erfahrungswissen und ein theoretisches Maschinenmodell umfaßt. Dadurch können alle beim Hersteller und/oder Maschinenbetreiber gewonnenen Erfahrungen oder vorhandenen Kenntnisse zur Diagnoseverbesserung genutzt werden. Im Hinblick auf eine maschinenbetriebsbegleitende Lernphase des Maschinendiagnosesystems ist es dabei vorteilhaft, wenn die Wissensbasis maschinenbetreiberseitig erweiterbar und/oder modifizierbar ist.

Weiterhin umfaßt die Erfindung das Verfahren nach den Ansprüchen 16 bis 30.

Die Erfindung wird im folgenden anhand von Ausführungsformen unter Bezugnahme auf die beiliegenden Figuren erläutert. Es zeigen:
- Fig. 1: eine schematische Darstellung einer Ausführungsform des erfindungsgemäßen Maschinendiagnosesystems,
- Fig. 2: eine die Funktion des Kennwertmoduls von Figur 1 erläuternde Darstellung,
- Fig. 3: eine die Funktion des Ursachenmoduls von Figur 1 erläuternde Darstellung und
- Fig. 4: eine schematische Darstellung einer weiteren Ausführungsform des erfindungsgemäßen Maschinendiagnosesystems.

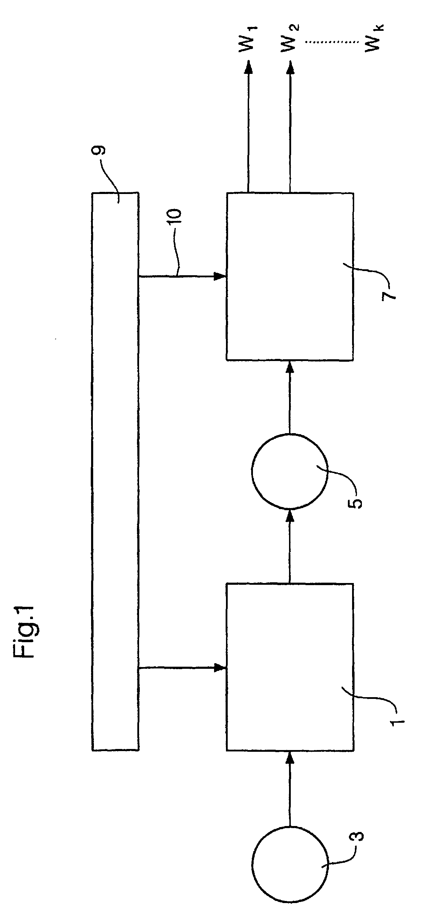

Die schematische Darstellung des erfindungsgemäßen Maschinendiagnosesystems in Figur 1 zeigt ein Kennwertmodul 1, welches aus an einer Maschine erfaßten Meßwerten 3 diagnoserelevante Kennwerte 5 bildet. Ein Ursachenmodul 7 berechnet nacheinander aus diesen Kennwerten 5 eine Reihe von Ursachenwahrscheinlichkeiten W₁, W₂, ... Wₖ. Die Ursachenwahrscheinlichkeit W₁, W₂ bzw. Wₖ ist die Wahrscheinlichkeit dafür, daß den Meßwerten 3 die Ursache 1, 2 bzw. k zugrundeliegt.

Figur 1 zeigt eine Ausführungsform, bei welcher das Kennwertmodul 1 die Kennwerte 5 mit Hilfe einer Wissensbasis 9 bildet. Die Wissensbasis 9 liegt bei der Ausführungsform nach Figur 1 aber auch der Berechnung der Ursachenwahrscheinlichkeiten W₁, W₂, ... Wₖ zugrunde und umfaßt neben maschinenindividuellem Erfahrungswissen des Maschinenherstellers und ggf. des Maschinenbetreibers auch ein theoretisches Maschinenmodell, wodurch die Diagnoserelevanz der Kennwerte auch von der Güte der theoretischen Modellierung der Maschine abhängen kann.

Die Erfindung ist aber nicht auf die in Figur 1 schematisch dargestellte Ausführungsform beschränkt. So kann die Bildung der Kennwerte 5 oder die Berechnung der Ursachenwahrscheinlichkeiten W₁, W₂, ... Wₖ auch ohne Rückgriff auf die Wissensbasis 9 erfolgen. Wesentlich ist die Bildung maschinenabhängiger, einfach handhabbarer, diagnoserelevanter Kennwerte 5 aus den primären Meßwerten 3. Die Kennwerte 5 können dadurch derart gebildet sein, daß sie für eine oder mehrere bestimmte Ursachen symptomatisch bzw. charakteristisch sind. Auch dadurch kann der Diagnoseaufwand bei großer Diagnosesicherheit und -zuverlässigkeit in praktikablen Grenzen gehalten werden.

Bei Anwendung des erfindungsgemäßen Maschinendiagnosesystems zur Schwingungsdiagnose bei rotierenden Wasserkraftmaschinen können die Meßwerte 3 an unterschiedlichen Stellen der Maschinenwelle der Wasserkraftanlage gemessene relative Wellenschwingungen umfassen. Weitere Meßwerte können in diesem Fall die Drehzahl der Welle, die Wirkbzw. Blindleistung, der Saugrohrdruck, der Rohrbahndruck oder die Leitradstellung sein. Die aus derartigen Meßwerten 3 gebildeten Kennwerte 5 können z. B. die spektralen Anteile der Wellenschwingungen umfassen, wie z.B. die drehzahlharmonischen, die drehzahlsubharmonischen oder auch die drehzahlinterharmonischen spektralen Anteile. Daneben hat es sich herausgestellt, daß auch die Orbit-Charakteristik der Wellenschwingungen ein diagnoserelevanter Kennwert ist. Dazu gehört z.B. das Hauptachsenverhältnis und die Orientierung der dem ersten drehzahlharmonischen Anteil der Wellenschwingung zugeordneten Ellipse. Auch die relative Ausrichtung derartiger Ellipsen an unterschiedlichen Meßorten der Welle sind mögliche Kennwerte. Weitere Beispiele für Kennwerte sind der Phasenwinkel auch für die höheren harmonischen Anteile der Schwingungen, Präzessionsbewegungen oder auch Standardabweichungen, zeitliche Mittelwerte oder Spitzenwerte derartiger Größen.

Auswahl und Art der Bestimmung dieser Kennwerte können in der konzeptionellen Wissensbasis 9 festgelegt sein. Auch das Ursachenmodul 7 kann sich auf derartiges in der Wissensbasis 9 gespeichertes Expertenwissen stützen.

Es hat sich gezeigt, daß aus den unmittelbaren oder auch voranalysierten Meßwerte 3 gebildte Kennwerte 5 für bestimmte Schwingungsursachen weitaus charakteristischer sein können als diese Meßwerte 3 selbst. Dieses Erfahrungswissen, das durch die theoretische Modellierung der Wasserkraftmaschine unterstützt und ausgebaut werden kann, kann der Ursachenwahrscheinlichkeitsberechnung durch das Ursachenmodul 7 zugrundeliegen, was in symbolischer Weise durch den von der Wissensbasis 9 ausgehenden und auf dem Ursachenmodul 7 endenden Pfeil 10 dargestellt wird. Eine mögliche Ursache der erfaßten Meßwerte kann z.B. ein Kupplungsfehler sein, welchem erfahrungsgemäß vor allem der Kennwert erste drehzahlharmonische Spektralanteil der Wellenschwingung zugeordnet ist. Die Ursache Ausrichtfehler dagegen kann am deutlichsten an dem Kennwert Drehzahlabhängigkeit der Hauptachsen der Schwingungsorbits erkannt werden.

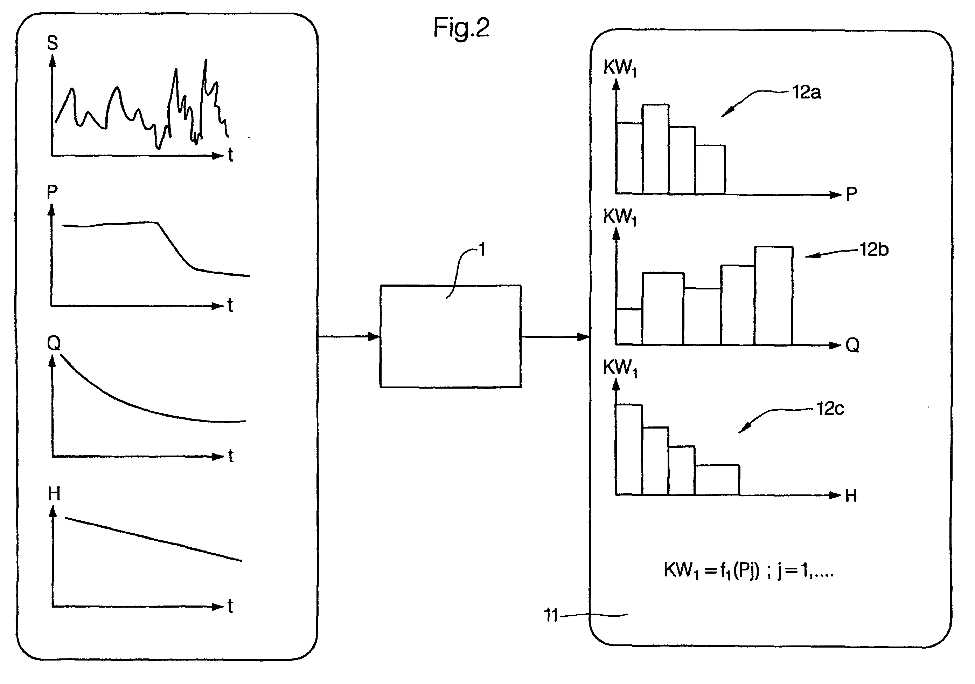

In Figur 2 ist eine besonders vorteilhafte Kennwertbildung dargestellt. Diese Kennwertbildung wird anhand einer Schwingungsmeßgröße S, z.B. einer Schwingungsamplitude, erläutert. Die Schwingungsmeßgröße S wird zeitabhängig gemessen und ist in Figur 2 als S-t-Diagramm dargestellt. Zeitgleich mit der Erfassung des Meßwerts S werden die als Betriebsparameter bezeichneten Größen Leistung P, Durchfluß Q und Fallhöhe H gemessen. Aus dem Meßwert S bildet das Kennwertmodul 1 den Kennwert KW₁, z.B. den ersten drehzahlharmonischen Spektralanteil der Schwingungsamplitude. Weitere diagnoserelevante Kennwerte bildet das Kennwertmodul 1 durch Zuordnung des Kennwerts KW₁ zu verschiedenen Intervallen der Betriebsparameter P, Q und H. Damit erhält man Kennwerte, welche als Kennwert-Betriebsparameter-Histogramme 12a, 12b, 12c oder als Funktionen der einzelnen Betriebsparameter Pj darstellbar sind, z.B. KW₁=f₁(Pj), j=1, 2, .... Da aufgrund der Vielfalt der Parameter, die das Schwingungsverhalten der Maschine beeinflussen, die Darstellung der durch eine Meßvorrichtung und ggf. durch ein Analysesystem bereitgestellten Meßgrößen als Funktion der Zeit nur wenig aufschlußreich ist, wird durch die Verknüpfung der Schwingungskennwerte mit Betriebsparametern und ggf. durch zeitliche Mittlung über verschiedene Zeiträume, z.B. Tage, Wochen, Monate usw. eine sinnvolle Zuordnung des zeitlichen Verlaufs von Kennwerten zu bestimmten Betriebszuständen möglich. Die Kennwerte KWᵢ, i=1, ... , werden in einem Langzeitspeicher 11 abgelegt.

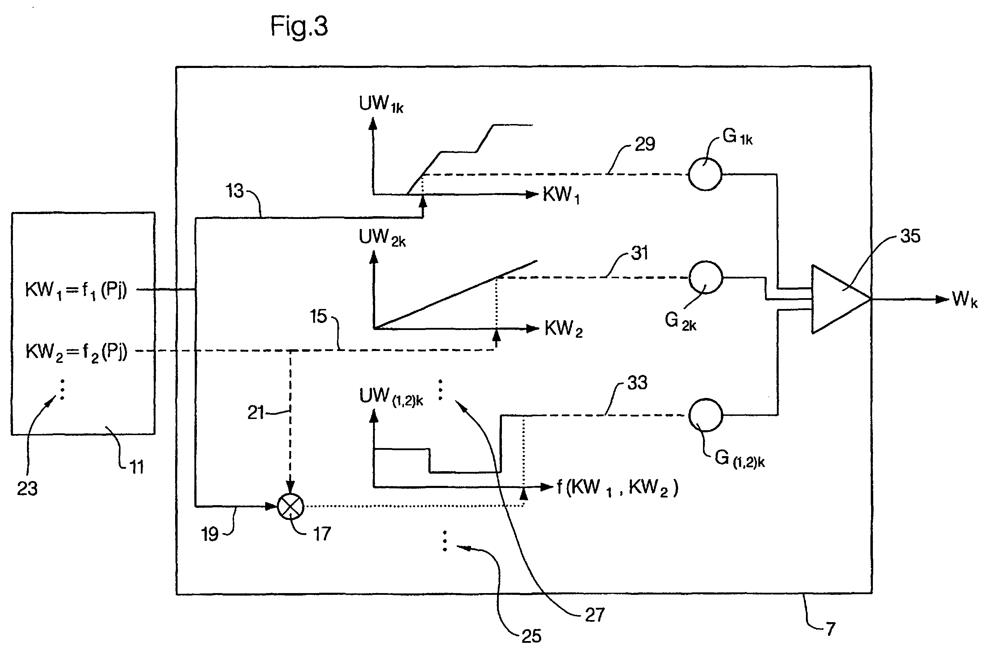

In Figur 3 ist schematisch dargestellt wie das Ursachenmodul 7 von Figur 1 aus diesen im Langzeitspeicher 11 gespeicherten Kennwerten KW₁, KW₂, ... die Wahrscheinlichkeit Wₖ für das Vorliegen der Ursache k berechnet.

Aus der als Funktion der Betriebsparameter Pj vom Kennwertmodul 1 gebildeten Kennwerte KW₁, KW₁ =f₁(Pj) j = 1,..., berechnet das Ursachenmodul 7 den dieser Kennwertmenge KW₁ zugeordneten Wahrscheinlichkeitsanteil uw₁ₖ anhand einer durch einen Polygonzug beschriebenen uw₁ₖ-KW₁-Beziehung. Dabei ist die in Figur 3 gewählte Darstellung der uw₁ₖ-KW₁-Beziehung als x-y-Diagramm nur symbolisch zu verstehen. Es kann nämlich jedem der von der Funktion f₁(Pj) umfaßten Kennwerte KW₁ ein derartiges x-y-Diagramm mit ggf. individuellem Polygonzug zugeordnet werden. Die Berechnung einzelner Wahrscheinlichkeitsanteile uw₁ₖ aus den Kennwerten KW₁ wird durch die durchgezogene Verbindungslinie 13 zwischen KW₁ und dem uw₁ₖ-KW₁-Diagramm dargestellt. In ähnlicher Weise wird der zur Ursache k beitragende Wahrscheinlichkeitsanteil uw₂ₖ, der auf die Kennwertmenge KW₂=f₂(Pj), Pj=1,... , zurückzuführen ist, durch die gestrichelte Verbindungslinie 15 dargestellt.

Eine ganz besonders vorteilhafte Ausführungsform dieser Erfindung berücksichtigt für die Berechnung der Ursachenwahrscheinlichkeit Wₖ auch Verknüpfungen von Kennwerten. Eine derartige Verknüpfung z.B. der Kennwerte KW₁ und KW₂ ist in Figur 3 durch das Verknüpfungssymbol 17 dargestellt, in welches die von dem Kennwert KW₁ ausgehende durchgezogene Verbindungslinie 19 und die von dem Kennwert KW₂ ausgehende, gestrichelte Verbindungslinie 21 mündet. Das Verknüpfungssymbol 17 kann jede denkbare Verknüpfung bedeuten, z.B. den Betrag der Differenz der Kennwerte KW₁ und KW₂: |KW₁-KW₂| oder eine durch eine beliebige Funktion zweier Variablen KW₁ und KW₂ beschriebene Verknüpfung. Daneben sind erfindungsgemäß auch Verknüpfungen von mehr als zwei Kennwerten möglich.

Der durch diese Verknüpfung 17 gebildete Zahlenwert wird als Eingangsgröße in einem gleichfalls durch einen Polygonzug beschriebenen uw_{(1,2)k}f(KW₁,KW₂)-Diagramm benutzt. Dabei ist uw_{(1,2)k} der Anteil an der Wahrscheinlichkeit für die Ursache k, welcher auf die Kennwertverknüpfung f(KW₁, KW₂) zurückzuführen ist.

Die jeweilige Form der in Figur 3 dargestellten Polygonzüge ist in der Wissensbasis 9 von Figur 1 gespeichert. Es hat sich herausgestellt, daß bereits durch lediglich fünf Zahlenpaare festgelegte Polygonzüge eine zuverlässige Maschinendiagnose ermöglichen.

Durch die mit den Bezugszeichen 23, 25 und 27 in Figur 3 gekennzeichneten Punktsymbole soll ausgedrückt werden, daß das Ursachenmodul 7 mehr als nur die beiden dargestellten Kennwertmengen KW₁ und KW₂ und mehr als nur die beiden dargestellten Wahrscheinlichkeitsanteil-Kennwert-Beziehungen und mehr als nur die eine dargestellte Wahrscheinlichkeitsanteil-Kennwertverknüpfung-Beziehung verwenden kann.

Aus den jeweiligen Werten der Wahrscheinlichkeitsanteile uw₁ₖ, uw₂ₖ ..., uw_{(1,2)k}, ... wird dann durch Multiplikation mit einem entsprechenden Gewichtungsfaktor G₁ₖ, G₂ₖ, ... , G_{(1,2)k}, ... und durch anschließende Mittelung dieser gewichteten Wahrscheinlichkeitsanteile die Ursachenwahrscheinlichkeit Wₖ berechnet. Durch die gestrichelten Linien 29, 31 und 33 wird die Gewichtung mit den Gewichtungsfaktoren G1k, G2k und G_{(1,2)k} dargestellt. Genauso wie für die Wahrscheinlichkeitsanteile uw₁ₖ können auch die Gewichtungsfaktoren G₁ₖ von den Betriebsparametem abhängig sein.

Die Anmelderin hat aber auch festgestellt, daß es vorteilhaft ist, die Größe der individuellen Gewichtungsfaktoren G₁ₖ, G₂ₖ, G_{(1,2)k} ... von den Kennwerten selbst abhängig zu machen. Wenn z.B. als Kennwert die Streuung einer bestimmten Schwingungsgröße gebildet worden ist, kann es vorteilhaft sein, einen dem Mittelwert dieser Schwingungsgröße zugeordneten Kennwert einen größeren Gewichtungsfaktor bei kleiner Streuung und einen kleineren Gewichtungsfaktor bei größerer Streuung zu geben. Anhand der Kennwertabhängigkeit dieser individuellen Gewichtungsfaktoren können somit Plausibilitätsbeziehungen berücksichtigt werden.

Die Bildung des arithmetischen Mittelwerts aus den gewichteten Wahrscheinlichkeitsanteilen ist in Figur 3 durch das mit 35 bezeichnete Dreieck dargestellt.

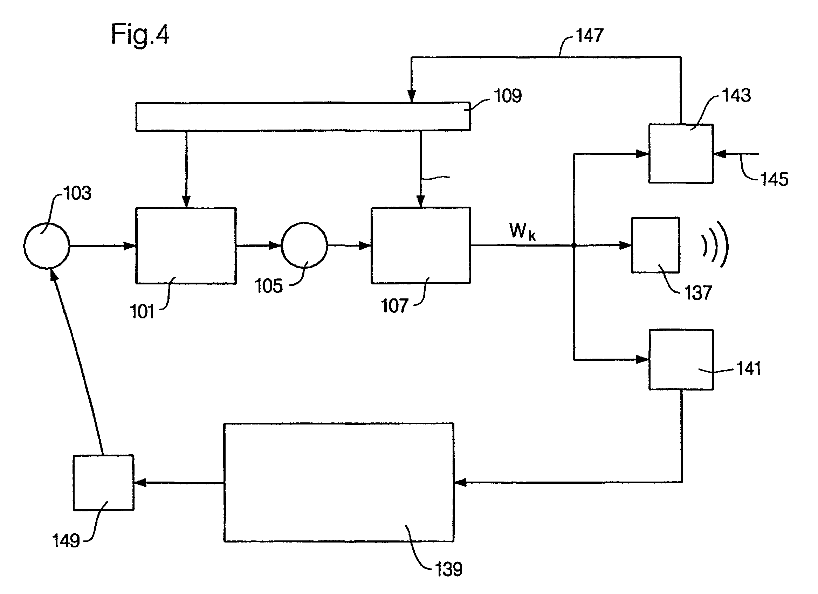

In Figur 4 ist eine weitere Ausführungsform des erfindungsgemäßen Maschinendiagnosesystems dargestellt, wobei die der Ausführungsform von Figur 1 entsprechenden Elemente die gleichen Bezugszeichen wie in Figur 1 vermehrt um die Zahl 100 aufweisen. Zur Erläuterung dieser Elemente wird auf die Beschreibung zu Figur 1 bezuggenommen.

Die von dem Ursachenmodul 107 berechnete Wahrscheinlichkeit Wₖ für das Vorliegen der Ursache k wird von dem Ursachenmodul 107 an ein Warnmodul 137 übergeben, welches das Bedienpersonal einer zu diagnostizierenden Maschine 139 beim Vorliegen einer bestimmten Ursachenwahrscheinlichkeit Wₖ oder auch einer bestimmten Verteilung von Ursachenwahrscheinlichkeiten benachrichtigt bzw. warnt. In entsprechender Weise können die Ursachenwahrscheinlichkeiten Wₖ aber auch an ein Reaktionsmodul 141 übergeben werden, welches im gegebenen Fall selbsttätig in den Betrieb der Maschine 139 eingreifen kann.

Die Ursachenwahrscheinlichkeiten können ferner an einem Experteneditor 143 dargestellt werden, welcher den Diagnoseexperten nicht nur über den Zustand der Maschine 139 unterrichtet sondern ihm auch die durch den Pfeil 145 dargestellte Möglichkeit gibt, das Maschinendiagnosesystem zu ergänzen bzw. zu modifizieren. Dazu ist z.B. eine durch die Verbindungslinie 147 dargestellte Verbindung zur Wissensbasis 109 vorteilhaft. Auf diese Weise können in die Wissensbasis 109 nicht nur die Erfahrung und das Maschinenverständnis des Maschinenherstellers, sondern auch die im Laufe des Betriebs gewonnenen Erfahrungen des Maschinenbetreibers eingehen. Der Experteneditor 143 erlaubt daneben auch noch die Darstellung von zur Bestimmung der einzelnen Kennwerte benutzten Zwischenergebnissen, um dem Diagnoseexperten auch eine Überwachung des Maschinendiagnosesystem selbst zu ermöglichen.

Die Ausführungsform von Figur 4 weist ferner ein Meßwerterfassungsmodul 149 auf, welches an der Maschine 139, z. B. einer hydraulischen Strömungsmaschine, gemessene Meßwerte 103 an das Kennwertmodul 101 übergibt.

## Patentansprüche

1. Maschinendiagnosesystem zur zustandsorientierten Betriebsüberwachung einer Maschine (139), umfassend
- ein Kennwertmodul (1; 101), welches ausgehend von maschinenzustandsbezogenen Meßwerten (3; 103) diagnoserelevante Kennwerte (5; 105) bildet, und
- ein Ursachenmodul (7; 107), welches aus den Kennwerten (5; 105) eine Ursache für die erfaßten Schwingungs-Meßwerte (3; 103) diagnostiziert,
**dadurch gekennzeichnet, daß**
- das Ursachenmodul (7; 107) für mindestens eine mögliche Ursache jeweils eine Ursachenwahrscheinlichkeit berechnet, die angibt, mit welcher Wahrscheinlichkeit die entsprechende Ursache für das Vorliegen der erfaßten Meßwerte (3; 103) verantwortlich ist, und
- das Kennwertmodul (1; 101) von Betriebsparametern abhängige Kennwerte (5; 105), durch Zuordnung des Kennwertes zu verschiedenen Intervallen der Betriebsparameter, bildet und das Ursachenmodul (7; 107) die Abhängigkeit der Kennwerte (5; 105) oder Kennwertverknüpfungen von den Betriebsparametern zur Berechnung der Ursachenwahrscheinlichkeit heranzieht.

2. Maschinendiagnosesystem nach Anspruch 1, **dadurch gekennzeichnet, daß** das Ursachenmodul (7; 107) zur Berechnung der Ursachenwahrscheinlichkeit neben einzelnen Kennwerten (5; 105) mindestens eine Kennwertverknüpfung heranzieht.

3. Maschinendiagnosesystem nach Anspruch 1 oder 2, **dadurch gekennzeichnet, daß** das Ursachenmodul (7; 107) die Ursachenwahrscheinlichkeit als gewichtetes arithmetisches Mittel von Einzelwahrscheinlichkeiten berechnet, wobei die Einzelwahrscheinlichkeiten einzelnen Kennwerten (5; 105) oder Kennwertverknüpfungen zugeordnet sind und zur Mittelwertbildung mit individuellen Gewichtungsfaktoren gewichtet sind.

4. Maschinendiagnosesystem nach Anspruch 3, **dadurch gekennzeichnet, daß** die individuellen Gewichtungsfaktoren kennwertbeeinflußt sind.

5. Maschinendiagnosesystem nach einem der Ansprüche 1 bis 4, **dadurch gekennzeichnet, daß** die Kennwerte (5; 105) oder Kennwertverknüpfungen zeitabhängig sind und daß das Kennwertmodul (1; 101) die Kennwerte (5; 105) oder Kennwertverknüpfungen bestimmten Betriebsparameterintervallen zuordnet, um Kennwert-Betriebsparameter-Histogramme (12a, 12b, 12c) zu bilden.

6. Maschinendiagnosesystem nach einem der Ansprüche 1 bis 5, **dadurch gekennzeichnet, daß** die Maschine eine rotierende Maschine (139) ist, deren Schwingungen zu diagnostizieren sind.

7. Maschinendiagnosesystem nach Anspruch 6, **dadurch gekennzeichnet, daß** die rotierende Maschine (139) eine hydraulische Strömungsmaschine (139) ist.

8. Maschinendiagnosesystem nach Anspruch 6 oder 7, **dadurch gekennzeichnet, daß** die spektralen Anteile der Wellenschwingungen und/oder die Orbit-Charakteristiken der Wellenschwingungen und/oder die Phasenwinkel der Wellenschwingungen Kennwerte (5; 105) sind.

9. Maschinendiagnosesystem nach einem der Ansprüche 1 bis 5 und nach einem der Ansprüche 6 bis 8, **dadurch gekennzeichnet, daß** ein Betriebsparameter verarbeitet wird, der eindeutig die momentane Betriebsart anzeigt, nämlich ob ein Pumpbetrieb oder ein Turbinenbetrieb oder ein Phasenschieberbetrieb oder ein Anfahren der Maschine (139) oder ein Auslaufen der Maschine (139) vorliegt.

10. Maschinendiagnosesystem nach einem der Ansprüche 1 bis 5 und nach Anspruch 7, **dadurch gekennzeichnet, daß** die Momentanleistung der Maschine (139) und/oder der Saugrohrdruck und/oder der Rohrbahndruck und/oder die Leitradstellung und/oder die Fallhöhe der hydraulischen Strömungsmaschine (139) ein Betriebsparameter ist.

11. Maschinendiagnosesystem nach einem der Ansprüche 1 bis 10, **dadurch gekennzeichnet, daß** ein Wammodul (137) bei Vorliegen einer bestimmten Ursachenwahrscheinlichkeit oder einer bestimmten Verteilung von Ursachenwahrscheinlichkeiten den Maschinenbetreiber warnt.

12. Maschinendiagnosesystem nach einem der Ansprüche 1 bis 11, **dadurch gekennzeichnet, daß** ein Reaktionsmodul (141) bei Vorliegen einer bestimmten Ursachenwahrscheinlichkeit oder einer bestimmten Verteilung von Ursachenwahrscheinlichkeiten in den Betrieb der Maschine (139) eingreifen kann.

13. Maschinendiagnosesystem nach einem der Ansprüche 1 bis 12, **dadurch gekennzeichnet, daß** die Berechnung der Ursachenwahrscheinlichkeit durch das Ursachenmodul (7; 107) von einer Wissensbasis (9; 109) ausgeht, welche maschinenindividuelles Erfahrungswissen und ein theoretisches Maschinenmodell umfaßt.

14. Maschinendiagnosesystem nach einem der Ansprüche 1 bis 13, **dadurch gekennzeichnet, daß** das Kennwertmodul (1; 101) zur Bildung der Kennwerte (5; 105) von einer Wissensbasis (9; 109) ausgeht, welche maschinenindividuelles Erfahrungswissen und ein theoretisches Maschinenmodell umfaßt.

15. Maschinendiagnosesystem nach einem der Ansprüche 13 oder 14, **dadurch gekennzeichnet, daß** die Wissensbasis (9; 109) um die Erfahrung des Maschinenbetreibers erweiterbar und/oder modifizierbar ist.

16. Verfahren zum Diagnostizieren der zustandsorientierten Betriebsüberwachung einer Maschine, bei welchem ausgehend von maschinenzustandsbezogenen Meßwerten (3; 103) diagnoserelevante Kennwerte (5; 105) gebildet werden und aus den Kennwerten (5; 105) eine Ursache für die erfaßten Meßwerte (3; 103) diagnostiziert wird,
**dadurch gekennzeichnet, daß**
- für mindestens ein mögliche Ursache jeweils eine Ursachenwahrscheinlichkeit berechnet wird, die angibt, mit welcher Wahrscheinlichkeit die entsprechende Ursache für das Vorliegen der erfaßten Meßwerte (3; 103) verantwortlich ist, und
- das Kennwertmodul (1; 101) von Betriebsparametern abhängige Kennwerte (5; 105), durch Zuordnung des Kennwertes zu verschiedenen Intervallen der Betriebsparameter, bildet und das Ursachenmodul (7; 107) die Abhängigkeit der Kennwerte (5; 105) oder Kennwertverknüpfungen von den Betriebsparametern zur Berechnung der Ursachenwahrscheinlichkeit heranzieht.

17. Verfahren nach Anspruch 16, **dadurch gekennzeichnet, daß** zur Berechnung der Ursachenwahrscheinlichkeit neben einzelnen Kennwerten (5; 105) mindestens eine Kennwertverknüpfung herangezogen wird.

18. Verfahren nach Anspruch 16 oder 17, **dadurch gekennzeichnet, daß** die Ursachenwahrscheinlichkeit als gewichtetes arithmetisches Mittel von Einzelwahrscheinlichkeiten berechnet wird, wobei die einzelnen Kennwerten (5; 105) oder Kennwertverknüpfungen zugeordneten Einzelwahrscheinlichkeiten zur Mittelwertbildung mit individuellen, wissensbasierten Gewichtungsfaktoren gewichtet werden.

19. Verfahren nach Anspruch 18, **dadurch gekennzeichnet, daß** die Mittelwertbildung mit kennwertbeeinflußten Gewichtungsfaktoren erfolgt.

20. Verfahren nach einem der Ansprüche 16 bis 19, **dadurch gekennzeichnet, daß** die Kennwerte (5; 105) oder Kennwertverknüpfungen zeitabhängig sind und daß die Kennwerte (5; 105) oder Kennwertverknüpfungen bestimmten Betriebsparameterintervallen zugeordnet werden, um Kennwert-Betriebsparameter-Histogramme (12a, 12b, 12c) zu bilden.

21. Verfahren nach einem der Ansprüche 16 bis 20, **dadurch gekennzeichnet, daß** die Schwingungen einer rotierenden Maschine (139) diagnostizieren werden.

22. Verfahren nach Anspruch 21, **dadurch gekennzeichnet, daß** die rotierende Maschine (139) eine hydraulische Strömungsmaschine (139) ist.

23. Verfahren nach Anspruch 21 oder 22, **dadurch gekennzeichnet, daß** die spektralen Anteile der Wellenschwingungen und/oder die Orbit-Charakteristiken der Wellenschwingungen und/oder die Phasenwinkel der Wellenschwingungen Kennwerte (5; 105) sind.

24. Verfahren nach nach einem der Ansprüche 16 bis 20 und nach einem der Ansprüche 21 bis 23, **dadurch gekennzeichnet, daß** ein Betriebsparameter verwendet wird, welcher angibt, ob ein Pumpbetrieb oder ein Turbinenbetrieb oder ein Phasenschieberbetrieb oder ein Anfahren der Maschine (139) oder ein Auslaufen der Maschine (139) vorliegt.

25. Verfahren nach einem der Ansprüche 16 bis 20 und nach Anspruch 22, **dadurch gekennzeichnet, daß** die Momentanleistung der Maschine (139) und/oder der Saugrohrdruck und/oder der Rohrbahndruck und/oder die Leitradstellung und/oder die Fallhöhe der hydraulischen Strömungsmaschine (139) als Betriebsparameter verwendet wird.

26. Verfahren nach einem der Ansprüche 16 bis 25, **dadurch gekennzeichnet, daß** bei Vorliegen einer bestimmten Ursachenwahrscheinlichkeit oder einer bestimmten Verteilung von Ursachenwahrscheinlichkeiten der Maschinenbetreiber gewarnt wird.

27. Verfahren nach einem der Ansprüche 16 bis 26, **dadurch gekennzeichnet, daß** bei Vorliegen einer bestimmten Ursachenwahrscheinlichkeit oder einer bestimmten Verteilung von Ursachenwahrscheinlichkeiten in den Betrieb der Maschine (139) eingegriffen werden kann.

28. Verfahren nach einem der Ansprüche 16 bis 27, **dadurch gekennzeichnet, daß** die Berechnung der Ursachenwahrscheinlichkeit von einer Wissensbasis (9; 109) ausgeht, welche maschinenindividuelles Erfahrungswissen und ein theoretisches Maschinenmodell umfaßt.

29. Verfahren nach einem der Ansprüche 16 bis 28, **dadurch gekennzeichnet, daß** die Bildung der Kennwerte (5; 105) von einer Wissensbasis (9; 109) ausgeht, welche maschinenindividuelles Erfahrungswissen und ein theoretisches Maschinenmodell umfaßt.

30. Verfahren nach einem der Ansprüche 28 oder 29, **dadurch gekennzeichnet, daß** der Maschinenbetreiber die Wissensbasis (9; 109) mit seinen Regeln erweitern und/oder modifizieren kann.

## Claims

1. A diagnostic system for machines for state-oriented operational monitoring of a machine (139), comprising
- a characteristic value module (1; 101) which based on machine-state-related measured values (3; 103) forms diagnosis-relevant characteristic values (5; 105) and
- a cause module (7; 107) which diagnoses from the characteristic values (5; 105) a cause for the detected measured vibration values (3; 103),
**characterized in that**
- the cause module (7; 107) calculates one cause probability each for at least one possible cause, which states the probability which the respective cause is responsible for the presence of the detected measured values (3; 103), and
- the characteristic value module (1; 101) forms characteristic values (5; 105) which are dependent on operating parameters by assigning the characteristic value to different intervals of the operating parameters and the cause module (7; 107) uses the dependence of the characteristic values (5; 105) or linkage of characteristic values of operating parameters in order to calculate the cause probability.

2. A diagnostic system for machines as claimed in claim 1, **characterized in that** the cause module (7; 107) uses at least one linkage of characteristic values for calculating the cause probability in addition to individual characteristic values (5; 105).

3. A diagnostics system for machines as claimed in claim 1 or 2, **characterized in that** the cause module (7; 107) calculates the cause probability as a weighted arithmetic mean of single probabilities, with the single probabilities being assigned to individual characteristic values (5; 105) or linkages of characteristic values and are weighted with individual weighting factors for the formation of the mean value.

4. A diagnostic system for machines as claimed in claim 3, **characterized in that** the individual weighting factors are influenced by the characteristic values.

5. A diagnostic system for machines as claimed in one of the claims 1 to 4, **characterized in that** the characteristic values (5; 105) or linkages of characteristic values are time-dependent and that the characteristic value module (1; 101) assigns the characteristic values (5, 105) or linkages of certain characteristic values to specific operating parameter intervals in order to form histograms (12a, 12b, 12c) of characteristic values and operating parameters.

6. A diagnostic system for machines as claimed in one of the claims 1 to 5, **characterized in that** the machine is a rotating machine (139) whose vibrations are to be diagnosed.

7. A diagnostic system for machines as claimed in claim 6, **characterized in that** the rotating machine (139) is a hydraulic flow machine (139).

8. A diagnostic system for machines as claimed in claim 6 or 7, **characterized in that** the spectral shares of the wave oscillations and/or the orbit characteristics of the wave oscillations and/or the phase angles of the wave oscillations are characteristic values (5; 105).

9. A diagnostic system for machines as claimed in one of the claims 1 to 5 and as claimed in one of the claims 6 to 8, **characterized in that** an operating parameter is processed which specifically shows the momentary operating mode, namely whether there is pumping operation, turbine operation or a phase shifter operation or a start-up of the machine (139) or deceleration of the machine (139).

10. A diagnostic system for machines as claimed in one of the claims 1 to 5 and as claimed in claim 7, **characterized in that** the momentary output of the machine (139) and/or the draft tube pressure and/or the tubular track pressure and/or the stator position and/or height of fall of the hydraulic flow machine (139) is an operating parameter.

11. A diagnostic system for machines as claimed in one of the claims 1 to 10, **characterized in that** a warning module (137) will warn the machine operator following the occurrence of a specific cause probability or a specific distribution of cause probabilities.

12. A diagnostic system for machines as claimed in one of the claims 1 to 11, **characterized in that** a reaction module (141) will intervene in the operation of the machine (139) following the occurrence of a specific cause probability or a specific distribution of cause probabilities.

13. A diagnostic system for machines as claimed in one of the claims 1 to 12, **characterized in that** the calculation of the cause probability by the cause module (7; 107) is based on a knowledge base (9; 109) which comprises empirical knowledge specific to the machine and a theoretical machine model.

14. A diagnostic system for machines as claimed in one of the claims 1 to 13, **characterized in that** the characteristic value module (1; 101), for the purpose of forming the characteristic values (5; 105), is based on a knowledge base (9; 109) which comprises empirical knowledge specific to the machine and a theoretical machine model.

15. A diagnostic system for machines as claimed in one of the claims 13 or 14, **characterized in that** the knowledge base (9; 109) can be expanded and/or modified by the experience gained by the machine operator.

16. A method for diagnosing the state-oriented operational monitoring of a machine in which diagnosis-relevant characteristic values (5; 105) are formed based on measured values (3; 103) relating to the state of the machine and a cause for the detected measured values (3; 103) is diagnosed from the characteristic values (5; 105), **characterized in that**
- for at least one possible cause each there is calculated one cause probability which states the probability with which the respective cause is responsible for the occurrence of the detected measured values (3; 103), and
- the characteristic value module (1; 101) forms characteristic values (5; 105) which are dependent upon the operating parameters by assigning the characteristic value to different intervals of the operating parameters and the cause module (7; 107) uses the dependence of the characteristic values (5; 105) or linkages of characteristic values of operating parameters for the purpose of calculating the cause probability.

17. A method as claimed in claim 16, **characterized in that** for calculating the cause probability at least one linkage of characteristic values is used in addition to the individual characteristic values (5; 105).

18. A method as claimed in claim 16 or 17, **characterized in that** the cause probability is calculated as a weighted arithmetic mean of single probabilities, with the individual characteristic values (5; 105) or single probabilities assigned to linkages of characteristic values being weighted with individual, knowledge-based weighting factors for forming the mean value.

19. A method as claimed in claim 18, **characterized in that** the mean value formation is performed with characteristic-value-influenced weighting factors.

20. A method as claimed in one of the claims 16 to 19, **characterized in that** the characteristic values (5; 105) or linkages of characteristic values are time-dependent and that the characteristic values (5; 105) or linkages of characteristic values are assigned to specific operating parameter intervals in order to form operating parameter histograms (12a, 12b, 12c).

21. A method as claimed in one of the claims 16 to 20, **characterized in that** the vibrations of a rotating machine (139) are diagnosed.

22. A method as claimed in claim 21, **characterized in that** the rotating machine (139) is a hydraulic flow machine (139).

23. A method as claimed in claim 21 or 22, **characterized in that** the spectral shares of the wave oscillations and/or the orbit characteristics of the wave oscillations and/or the phase angles of the wave oscillations are characteristic values (5; 105).

24. A method as claimed in one of the claims 16 to 20 and as claimed in one of the claims 21 to 23, **characterized in that** an operating parameter is used which states whether there is pumping operation or turbine operation or a phase shifter operation or a start-up of the machine (139) or deceleration of the machine (139).

25. A method as claimed in one of the claims 16 to 20 and as claimed in claim 22, **characterized in that** the momentary output of the machine (139) and/or the draft tube pressure and/or the tubular track pressure and/or the stator position and/or height of fall of the hydraulic flow machine (139) is used as an operating parameter.

26. A method as claimed in one of the claims 16 to 25, **characterized in that** the machine operator is warned when there is a specific cause probability or a specific distribution of cause probabilities.

27. A method as claimed in one of the claims 16 to 26, **characterized in that** it is possible to intervene in the operation of the machine (139) following the occurrence of a specific cause probability or a specific distribution of cause probabilities.

28. A method as claimed in one of the claims 16 to 27, **characterized in that** the calculation of the cause probability is based on a knowledge base (9; 109) which comprises empirical knowledge specific to the machine and a theoretical machine model.

29. A method as claimed in one of the claims 16 to 28, **characterized in that** the formation of the characteristic values (5; 105) is based on a knowledge base (9; 109) which comprises empirical knowledge specific to the machine and a theoretical machine model.

30. A method as claimed in one of the claims 28 or 29, **characterized in that** the machine operator can extend and/or modify the knowledge base (9; 109) with his rules.

## Revendications

1. Système de diagnostic de machine pour la surveillance en fonction de l'état du fonctionnement d'une machine (139), comprenant :
- un module de valeurs caractéristiques (1 ; 101) qui constitue, à partir des valeurs de mesure (3 ; 103) concernant l'état de la machine, des valeurs caractéristiques (5 ; 105) pertinentes pour le diagnostic, et
- un module de causes (7 ; 107) qui diagnostique à partir des valeurs caractéristiques (5 ; 105) une cause aux valeurs de mesure de vibrations (3 ; 103) détectées,
**caractérisé en ce que**
- le module de causes (7 ; 107) calcule pour une cause au moins une probabilité pour chaque cause, qui indique la probabilité que la cause correspondante soit responsable des valeurs de mesure (3 ; 103) détectées, et
- le module de valeurs caractéristiques (1 ; 101) constitue des valeurs caractéristiques (5 ; 105) dépendantes des paramètres de fonctionnement par affectation de la valeur caractéristique à différents intervalles des paramètres de fonctionnement et le module de causes (7 ; 107) utilise la dépendance des valeurs caractéristiques (5 ; 105) ou les corrélations entre les valeurs caractéristiques des paramètres de fonctionnement pour calculer la probabilité des causes.

2. Système de diagnostic de machine selon la revendication 1, **caractérisé en ce que** le module de causes (7 ; 107) utilise pour calculer la probabilité des causes, outre certaines valeurs caractéristiques (5 ; 105), au moins une corrélation entre les valeurs caractéristiques.

3. Système de diagnostic de machine selon la revendication 1 ou 2, **caractérisé en ce que** le module de causes (7 ; 107) calcule la probabilité des causes sous la forme de la moyenne arithmétique pondérée des différentes probabilités, les différentes probabilités étant affectées à des valeurs caractéristiques (5 ; 105) ou des corrélations de valeurs caractéristiques et pondérées avec des facteurs de pondération individuels pour calculer la moyenne.

4. Système de diagnostic de machine selon la revendication 3, **caractérisé en ce que** les facteurs de pondération individuels sont influencés par les valeurs caractéristiques.

5. Système de diagnostic de machine selon l'une quelconque des revendications 1 à 4, **caractérisé en ce que** les valeurs caractéristiques (5 ; 105) ou les corrélations de valeurs caractéristiques sont fonction du temps et **en ce que** le module de valeurs caractéristiques (1 ; 101) affecte les valeurs caractéristiques (5 ; 105) ou les corrélations de valeurs caractéristiques à certains intervalles des paramètres de fonctionnement pour constituer des histogrammes de valeurs caractéristiques et de paramètres de fonctionnement (12a, 12b, 12c).

6. Système de diagnostic de machine selon l'une quelconque des revendications 1 à 5, **caractérisé en ce que** la machine est une machine en rotation (139) dont les vibrations doivent être diagnostiquées.

7. Système de diagnostic de machine selon la revendication 6, **caractérisé en ce que** la machine en rotation (139) est une machine à circulation hydraulique (139).

8. Système de diagnostic de machine selon la revendication 6 ou 7, **caractérisé en ce que** les parties spectrales des vibrations en ondes et/ou les caractéristiques d'orbite des vibrations et/ou les angles de phase des vibrations sont des valeurs caractéristiques (5 ; 105).

9. Système de diagnostic de machine selon l'une quelconque des revendications 1 à 5 et selon l'une quelconque des revendications 6 à 8, **caractérisé en ce qu'**il traite un paramètre de fonctionnement qui indique clairement le mode de fonctionnement instantané, à savoir la présence ou l'absence d'un fonctionnement de la pompe ou de la turbine ou du déphaseur ou un démarrage de la machine (139) ou un arrêt de la machine (139).

10. Système de diagnostic de machine selon l'une quelconque des revendications 1 à 5 et selon la revendication 7, **caractérisé en ce que** le rendement instantané de la machine (139) et/ou la pression de la conduite d'aspiration et/ou la pression dans la tuyauterie et/ou la position de l'aube directrice et/ou la hauteur de chute de la machine à écoulement hydraulique (139) sont des paramètres de fonctionnement.

11. Système de diagnostic de machine selon l'une quelconque des revendications 1 à 10, **caractérisé en ce qu'**un module d'alerte (137) alerte l'opérateur de la machine s'il existe une certaine probabilité de cause ou une certaine distribution de probabilités de causes.

12. Système de diagnostic de machine selon l'une quelconque des revendications 1 à 11, **caractérisé en ce qu'**un module de réaction (141) peut intervenir sur le fonctionnement de la machine (139) s'il existe une certaine probabilité de cause ou une certaine distribution de probabilités de causes.

13. Système de diagnostic de machine selon l'une quelconque des revendications 1 à 12, **caractérisé en ce que** le calcul de la probabilité des causes par le module de causes (7 ; 107) se fonde sur une base de connaissances (9 ; 109) qui comprend des données d'expérience spécifiques de la machine et un modèle de machine théorique.

14. Système de diagnostic de machine selon l'une quelconque des revendications 1 à 13, **caractérisé en ce que** le module de valeurs caractéristiques (1 ; 101) utilise pour constituer les valeurs caractéristiques (5 ; 105) une base de connaissances (9 ; 109) qui comprend des données d'expérience spécifiques de la machine et un modèle de machine théorique.

15. Système de diagnostic de machine selon l'une quelconque des revendications 13 ou 14,
**caractérisé en ce que** la base de connaissances (9 ; 109) peut être étendue et/ou modifiée en fonction de l'expérience de l'opérateur de la machine.

16. Procédé de diagnostic pour la surveillance en fonction de l'état du fonctionnement d'une machine, dans lequel des valeurs caractéristiques (5 ; 105) pertinentes pour le diagnostic sont constituées à partir de valeurs de mesure (3 ; 103) liées à l'état de la machine et une cause est diagnostiquée pour les valeurs de mesure (3 ; 103) en fonction des valeurs caractéristiques (5 ; 105),
**caractérisé en ce que**
- au moins une probabilité est calculée pour chaque cause au nombre d'une au moins, qui indique la probabilité que la cause correspondante soit responsable des valeurs de mesure (3 ; 103) détectées, et
- le module de valeurs caractéristiques (1 ; 101) constitue des valeurs caractéristiques (5 ; 105) dépendantes des paramètres de fonctionnement par affectation de la valeur caractéristique à différents intervalles des paramètres de fonctionnement et le module de causes (7 ; 107) utilise la dépendance des valeurs caractéristiques (5 ; 105) ou les corrélations entre les valeurs caractéristiques des paramètres de fonctionnement pour calculer la probabilité des causes.

17. Procédé selon la revendication 16, **caractérisé en ce que** le calcul de la probabilité des causes utilise, outre certaines valeurs caractéristiques (5 ; 105), au moins une corrélation entre les valeurs caractéristiques.

18. Procédé selon la revendication 16 ou 17, **caractérisé en ce que** la probabilité des causes est calculée sous la forme de la moyenne arithmétique pondérée des différentes probabilités, les différentes probabilités étant affectées à des valeurs caractéristiques (5 ; 105) ou des corrélations de valeurs caractéristiques et pondérées avec des facteurs de pondération individuels basés sur des connaissances pour calculer la moyenne.

19. Procédé selon la revendication 18, **caractérisé en ce que** le calcul de la moyenne utilise des facteurs de pondération influencés par les valeurs caractéristiques.

20. Procédé selon l'une quelconque des revendications 16 à 19, **caractérisé en ce que** les valeurs caractéristiques (5 ; 105) ou les corrélations de valeurs caractéristiques sont fonction du temps et **en ce que** les valeurs caractéristiques (5 ; 105) ou les corrélations de valeurs caractéristiques sont affectées à certains intervalles des paramètres de fonctionnement pour constituer des histogrammes de valeurs caractéristiques et de paramètres de fonctionnement (12a, 12b, 12c).

21. Procédé selon l'une quelconque des revendications 16 à 20, **caractérisé en ce que** les vibrations d'une machine en rotation (139) doivent être diagnostiquées.

22. Procédé selon la revendication 21, **caractérisé en ce que** la machine en rotation (139) est une machine à circulation hydraulique (139).

23. Procédé selon la revendication 21 ou 22, **caractérisé en ce que** les parties spectrales des vibrations en ondes et/ou les caractéristiques d'orbite des vibrations et/ou les angles de phase des vibrations sont des valeurs caractéristiques (5 ; 105).

24. Procédé selon l'une quelconque des revendications 16 à 20 et selon l'une quelconque des revendications 21 à 23, **caractérisé en ce qu'**il utilise un paramètre de fonctionnement qui indique clairement la présence ou l'absence d'un fonctionnement de la pompe ou de la turbine ou du déphaseur ou un démarrage de la machine (139) ou un arrêt de la machine (139).

25. Procédé selon l'une quelconque des revendications 16 à 20 et selon la revendication 22, **caractérisé en ce que** le rendement instantané de la machine (139) et/ou la pression de la conduite d'aspiration et/ou la pression dans la tuyauterie et/ou la position de l'aube directrice et/ou la hauteur de chute de la machine à écoulement hydraulique (139) sont utilisés comme paramètres de fonctionnement.

26. Procédé selon l'une quelconque des revendications 16 à 25, **caractérisé en ce que** l'opérateur de la machine est alerté s'il existe une certaine probabilité de cause ou une certaine distribution de probabilités de causes.

27. Procédé selon l'une quelconque des revendications 16 à 26, **caractérisé en ce qu'**il est possible d'intervenir sur le fonctionnement de la machine (139) s'il existe une certaine probabilité de cause ou une certaine distribution de probabilités de causes.

28. Procédé selon l'une quelconque des revendications 16 à 27, **caractérisé en ce que** le calcul de la probabilité des causes se fonde sur une base de connaissances (9 ; 109) qui comprend des données d'expérience spécifiques de la machine et un modèle de machine théorique.

29. Procédé selon l'une quelconque des revendications 16 à 28, **caractérisé en ce que** la constitution des valeurs caractéristiques (5 ; 105) utilise une base de connaissances (9 ; 109) qui comprend des données d'expérience spécifiques de la machine et un modèle de machine théorique.

30. Procédé selon l'une quelconque des revendications 28 ou 29, **caractérisé en ce que** l'opérateur de la machine peut étendre et/ou modifier la base de connaissances (9 ; 109) selon ses propres règles.
